Europäisches Patentamt

(19) European Patent Office

Office européen des brevets

(11) EP 0 573 237 B1

(12) **EUROPEAN PATENT SPECIFICATION**

(45) Date of publication and mention
of the grant of the patent:
**03.04.1996 Bulletin 1996/14**

(51) Int. Cl.$^6$: **B60C 9/22**

(21) Application number: **93304204.6**

(22) Date of filing: **28.05.1993**

(54) **Pneumatic radial tires for construction vehicles**

Radiale Luftreifen für Baufahrzeuge

Bandages pneumatiques radiaux pour véhicules de chantier

(84) Designated Contracting States:
**DE ES LU**

(30) Priority: **05.06.1992 JP 145721/92**

(43) Date of publication of application:
**08.12.1993 Bulletin 1993/49**

(73) Proprietor: **Bridgestone Corporation
Tokyo 104 (JP)**

(72) Inventors:
• **Sato, Tetsuhiko
Kodaira City, Tokyo (JP)**

• **Yoda, Hidetoshi
Kodaira City, Tokyo (JP)**
• **Ando, Shuji
Kodaira City, Tokyo (JP)**

(74) Representative: **Whalley, Kevin et al
MARKS & CLERK,
57-60 Lincoln's Inn Fields
London WC2A 3LS (GB)**

(56) References cited:
| | |
|---|---|
| EP-A- 0 332 449 | EP-A- 0 384 558 |
| FR-A- 2 624 063 | GB-A- 2 092 963 |

## Description

This invention relates to a pneumatic radial tire for construction vehicles mainly running on rough roads, and more particularly to a radial tire developing an excellent resistance to cut penetration to enhance the wear life of a tread and having a high economical value.

The term "construction vehicle" used herein means vehicles running on construction sites, mining sites, deforestation sites and the like, such as dump trucks, skidders, scrapers, loader/dossers, graders and so on.

In general, pneumatic radial tires for construction vehicles have frequently suffered deep cut damage in tread portion when they are run on non-paved roads of construction sites, mining sites and the like to ride over sharp-edged large rocks and stones and other objects. Once cut damage occurs in the tire, it directly arrives at a belt layer in the tire to rapidly cause burst failure leading to disuse of the tire, or even if such a cut-damaged tire may be run for some time, water penetrates from the cut damage at the belt layer into the interior of the belt to cause corrosion of steel cords in the belt layer, during which peeling-off of adhesion portion between the cord and rubber surrounding it proceeds to cause separation failure of the belt and hence the tire is frequently disused.

As a direct countermeasure for the above failure, there are known tires in which so-called high-elongation steel cords having a large elongation, for example an elongation at break of about 4-7% are used as a reinforcement of an outermost belt layer among plural belt layers in the radial direction of the tire and cut energy is absorbed by this outermost belt layer to prevent the growth of cut damage into the inner belt layer.

Furthermore, it is well-known that tension applied to the tread portion of the tire affects the degree of cut damage in the tread portion. In this connection, there is a technique disclosed, for example, in Japanese Patent laid open No. 2-234805. According to this conventional technique, tension applied to the belt layer is reduced when inflating the tire, and hence tension applied to the tread portion may be reduced to improve cut resistance in the tread rubber.

In the tires having an outermost belt layer comprised of the above high-elongation steel cords, however, the resistance to cut penetration can certainly be improved, but such a resistance is still critical and there is caused a problem that resistance to cut penetration sufficient to protect the inner belt layer from cut damage is not developed in running on road surfaces under severe cut-damaging conditions.

Also, it has been attempted to decrease the cord angle of the belt layer with respect to the circumferential direction of the tread portion to a range of, for example, 5° to 15° to increase tension bearing of the belt layer to thereby control the expansion of the tread portion in the radial direction of the tire and minimize tension applied to the tread portion. In this case, the effect of controlling the expansion of the tread portion is certainly sufficient, but separation failure at the end of the belt layer is prematurely caused to decrease the service life of the tire. Moreover, the enlargement of the belt width creates the effect and problem as mentioned above.

On the other hand, according to the technique described in Japanese Patent laid open No. 2-234805, the effect of improving the degree of cut damage in the tread rubber under relatively mild cut-damaging conditions is recognized likewise the case of using the above high-elongation steel cords. However, this technique itself is to prevent the separation failure at the end of the belt layer, so that it can not attain the absorption and mitigation of large cut energy causing damage of the belt layer.

Moreover, it has been attempted to combine the use of the high-elongation steel cords with the technique described in Japanese Patent laid open No. 2-234805. In this case, it is confirmed that some improving effect is recognized, but satisfactory resistance to cut penetration has not yet been developed under severe cut-damaging conditions.

It is, therefore, an object of the present invention to provide a pneumatic radial tire for construction vehicles having improved resistance to cut penetration for preventing at least cutting of reinforcing steel cords in the belt layer under severe cut-damaging conditions, while maintaining or improving the separation resistance at the end of the belt layer.

According to the invention, there is provided a pneumatic radial tire comprising a radial carcass comprised of a single ply toroidally extending between a pair of bead cores and containing steel cords therein, a belt arranged outside the radial carcass and comprised of at least two belt layers each containing steel cords therein, and a tread arranged outside the belt, and a reinforcing layer disposed between the radial carcass and the belt along an inner peripheral surface of an innermost belt layer in the belts and a protection layer disposed between the belt and the tread along an outer peripheral surface of an outermost belt layer in the belt, wherein each of the reinforcing layer and the protection layer includes reinforcing elements of steel cord or steel filament extending in a circumferential direction of the tire and having wavy or zigzag form of given period and amplitude, and the wavelength $\lambda_1$ and amplitude $A_1$ of each reinforcing element in the reinforcing layer and the wavelength $\lambda_2$ and amplitude $A_2$ of each reinforcing element in the protection layer satisfy the following relationships:

$$A_1/\lambda_1 < A_2/\lambda_2$$

$$A_1/\lambda_1 \leqq 0.08$$

$$A_2/\lambda_2 \geqq 0.10.$$

In a preferred embodiment of the invention, the wavelengths $\lambda_1$, $\lambda_2$ and amplitudes $A_1$, $A_2$ satisfy the following relationship:

$$1.25 \times A_1/\lambda_1 \leq A_2/\lambda_2 \leq 70 \times A_1/\lambda_1.$$

The invention will be described with reference to the accompanying drawings, wherein:

Fig. 1 is a diagrammatically radial-half section view of a first embodiment of a pneumatic radial tire for construction vehicles according to the invention;

Figs. 2a and 2b are schematically developed views of reinforcing elements in a reinforcing layer and a protection layer used in the first embodiment, respectively;

Fig. 3 is a schematically developed view of reinforcing elements in another reinforcing layer and protection layer; and

Fig. 4 is a diagrammatically perspective view of a step-down cut sample in the first embodiment of the pneumatic radial tire for construction vehicles according to the invention.

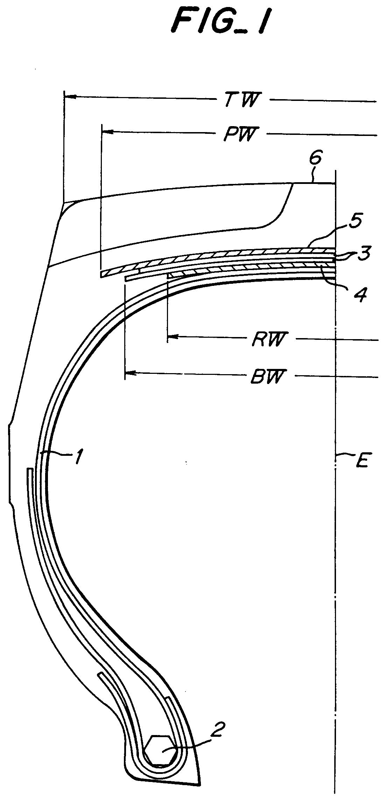

The invention will be described in detail with respect to an embodiment shown in Figs. 1 to 3.

Fig. 1 shows a radial section of a first embodiment of a pneumatic radial tire for construction vehicles according to the invention as a left-half portion thereof with respect to an equatorial plane E of the tire. Numeral 1 is a radial carcass of a single ply toroidally extending between a pair of bead cores 2 and containing steel cords therein. Numeral 3 is a belt comprised of at least two belt layers (two belt layers in this embodiment) each containing steel cords inclined at a given angle with respect to a circumferential direction of a tread 6, wherein the steel cords in the adjoining two belt layers are crossed with each other. Moreover, the term "circumferential direction of tread" used herein means a direction of passing the equatorial plane E of the tire through the tread 6.

Numeral 4 is a reinforcing layer disposed between the carcass 1 and the belt 3 along an inner peripheral surface of an innermost belt layer in the belt 3. Numeral 5 is a protection layer disposed between the belt 3 and the tread 6 along an outer peripheral surface of an outermost belt layer in the belt 3. In the embodiment of Fig. 1, each of the reinforcing layer 4 and the protection layer 5 is single, but two or more reinforcing layers 4 and two or more protection layers 5 may be used. Moreover, it is possible to combine a certain number of reinforcing layers 4 with a certain number of protection layers 5 in accordance with the use purpose.

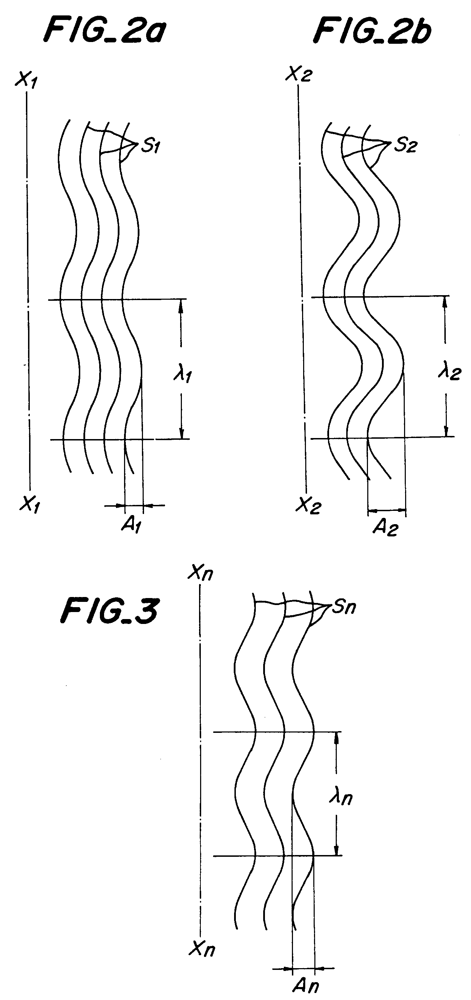

In Figs. 2a and 2b are shown developed views illustrating arrangements of wavy reinforcing elements in the reinforcing layer 4 and the protection layer 5, respectively.

In Fig. 2a, $S_1$ is a reinforcing element in the reinforcing layer 4 and is a steel cord obtained by twisting a given number of steel filaments, which shows a form of approximately sine curve after the tire building through vulcanization. This form may be attained by previously subjecting the steel cords at a formation stage to plastic deformation working for obtaining a desired form. A line $X_1$-$X_1$ is coincident with the circumferential direction of the tread. The reinforcing layer 4 is formed by arranging many reinforcing elements $S_1$ along the line $X_1$-$X_1$. As the reinforcing element $S_1$, a bundle of plural steel filaments may be used in addition to the above steel cord. The form of approximately sine curve in the steel cord or steel filament appears in a plane substantially in parallel with the surface of the belt layer.

A period of amplitude in approximately sine curve of the reinforcing element $S_1$ is constant. The wavelength and amplitude of this curve are shown by $\lambda_1$ and $A_1$ in Fig. 2a, respectively. That is, the wavelength $\lambda_1$ and amplitude $A_1$ are constant over the full circumference of the reinforcing layer 4.

In Fig. 2b, $S_2$ is a reinforcing element in the protection layer 5 and is a steel cord or a bundle of plural steel filaments, which shows a form of approximately sine curve after the tire building through vulcanization. This form may be attained by previously subjecting at a formation stage to plastic deformation working for obtaining a desired form likewise the case of $S_1$. A line $X_2$-$X_2$ is coincident with the circumferential direction of the tread. The protection layer 5 is formed by arranging many reinforcing elements $S_2$ along the line $X_2$-$X_2$. The form of approximately sine curve in the steel cord or steel filament appears in a plane substantially in parallel with the surface of the belt layer.

A period of amplitude in approximately sine curve of the reinforcing element $S_2$ is constant. The wavelength and amplitude of this curve are shown by $\lambda_2$ and $A_2$ in Fig. 2b, respectively. That is, the wavelength $\lambda_2$ and amplitude $A_2$ are constant over the full circumference of the protection layer 5.

According to the invention, it is necessary that the relationship between wavelength and amplitude in the reinforcing elements $S_1$ and $S_2$ satisfy $A_1/\lambda_1 < A_2/\lambda_2$, $A_1/\lambda_1 \leq 0.08$ and $A_2/\lambda_2 \geq 0.10$. Preferably, $A_1/\lambda_1$ is not more than 0.06 and $A_2/\lambda_2$ is not less than 0.15. More particularly, $A_1/\lambda_1$ is not less than 0.01 and $A_2/\lambda_2$ is not more than 1.0.

It is also preferable that the wavelengths $\lambda_1$, $\lambda_2$ and amplitudes $A_1$, $A_2$ satisfy the following relationship:

$$1.25 \times A_1/\lambda_1 \leq A_2/\lambda_2 \leq 70 \times A_1/\lambda_1,$$

and more particularly

$$1.5 \times A_1/\lambda_1 \leq A_2/\lambda_2 \leq 40 \times A_1/\lambda_1.$$

As shown in Figs. 2a and 2b, the reinforcing elements $S_1$ and $S_2$ are arranged substantially in parallel with each other in the reinforcing layer 4 and the protection layer 5, respectively, and they may be optionally arranged such that the reinforcing elements do not contact each other in each of the above layers.

In Fig. 3 is shown a developed view illustrating the arrangement of zigzag-formed reinforcing elements $S_n$ in each of the reinforcing layer 4 and the protection layer 5 in another embodiment of the tire. Each of these reinforcing elements $S_n$ has such a zigzag form that a peak is curved and these peaks are connected to each other through substantially a straight line and is a steel cord or a bundle of plural steel filaments. When these reinforcing elements $S_n$ are used in each of the reinforcing layer 4 and the protection layer 5, it is naturally desired that the relationship between wavelength $\lambda_n$ and amplitude $A_n$ satisfy the aforementioned equations.

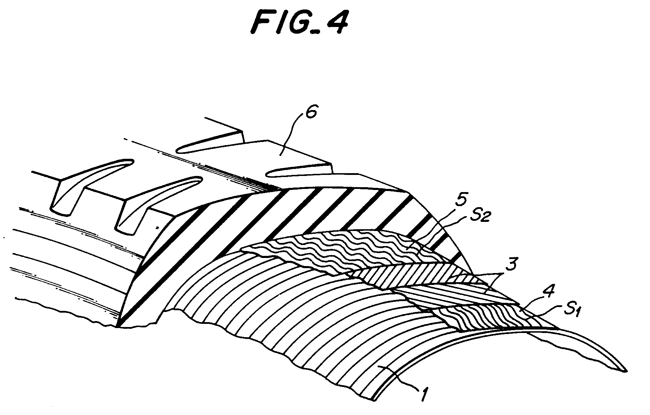

Fig. 4 shows a partial perspective view of a step-down cut sample in the embodiment of the pneumatic radial tire for construction vehicles shown in Figs. 1 and 2.

The invention will be further described in detail with respect to main function of each of the belt, the reinforcing layer and the protection layer.

The belt 3 located between the reinforcing layer and the protection layer gives the radial tire various rigidities required for mainly developing basic performances of the tire such as wear resistance, low heat build-up, high-speed durability and the like. For example, these rigidities are tensile rigidity, compression rigidity, bending rigidity and the like.

The reinforcing layer 4 mainly bears a large tension during the inflation under an internal pressure to thereby mitigate undesirably large tension applied to the belt and the tread. This tension-bearing function particularly produces the effect of preventing an initial cut applied to the tread. Although the reinforcing layer 4 is a tension member, the bending rigidity in widthwise and circumferential directions of the tread is low and the effect of decreasing the likelihood of deep cut failure is developed without damaging the enveloping property.

When the value of $A_2/\lambda_2$ in the reinforcing element $S_2$ of the protection layer 5 is compared with the value of $A_1/\lambda_1$ in the reinforcing element $S_1$ of the reinforcing layer 4, the amplitude to the wavelength in the protection layer 5 is made sufficiently large, so that it is possible to form a layer having sufficiently low values of all rigidities such as tensile rigidity, compression rigidity and bending rigidity. Firstly, these low rigidities largely improve the enveloping property to more enhance the ability of absorbing and mitigating cut energy and hence decrease the likelihood of cut failure. Secondly, even if cut failure is caused by materials such as rocks and stones to arrive at the protection layer 5 through the tread, since the protection layer 5 has a high ability of absorbing the cut energy, the function of the protection layer for preventing cut failure reaching the belt becomes satisfactory.

As mentioned above, in the pneumatic radial tire for construction vehicles according to the invention, the belt 3 developing properties inherent to the radial tire is sandwiched between the reinforcing layer 4 and the protection layer 5 having different properties and these layers 4 and 5 are arranged in place, so that it is possible to provide a more improved resistance to cut penetration in addition to the development of properties inherent to the radial tire.

When the value of $A_1/\lambda_1$ in the reinforcing element $S_1$ of the reinforcing layer 4 is not more than 0.8, the reinforcing layer 4 has a sufficient tension bearing function in the tire inflation as mentioned above, and can develop the effect of mitigating tension applied to the belt and the tread. This brings about not only the effect of preventing the initial cut of the tread without damaging the enveloping property but also the effect of preventing the belt separation. When the value of $A_1/\lambda_1$ exceeds 0.8, it is impossible to sufficiently develop the tension bearing function as a steel material.

Furthermore, when the value of $A_2/\lambda_2$ in the reinforcing element $S_2$ of the protection layer 5 is not less than 0.10, if the protection layer 5 is further arranged on the laminate of the belt and the reinforcing layer, all of tensile rigidity, compression rigidity and bending rigidity in the full laminate are restrained to sufficiently low values. Thus, the enveloping property of the tire is considerably improved and it is possible to decrease the likelihood of cut failure. Even if cut failure is caused by materials such as rocks and stones to arrive at the protection layer 5 through the tread, the largely deformable protection layer 5 having low values of various rigidities sufficiently absorbs the cut energy to prevent the growth of cut failure and it is possible to prevent the arrival of the cut failure reaching the belt located inside the protection layer. When the value of $A_2/\lambda_2$ is less than 0.10, the above rigidities become too high and the sufficient followability to the penetration of cut failure (enveloping property) is lost.

The following examples are given in illustration of the invention and are not intended as limitations thereof.

Example 1

In this example, there is provided a pneumatic radial tire for construction vehicles having a tire size of 18.00R25 and a tread class of E3, which has a basic construction shown in Fig. 1.

The carcass 1 is a single ply of radial structure containing steel cords therein. The belt 3 is comprised of two belt layers each containing steel cords with a strength of 150 kgf/cord arranged at an end count of 20 cords/5 cm at an inclination cord angle of 25° with respect to the circumferential direction of the tread, the cords of which layers are crossed with each other.

The reinforcing layer 4 is a single layer containing steel cords with a strength of 150 kgf/cord as a reinforcing element $S_1$, which cords are formed into an approximately sine curve at $\lambda_1$ of 40 mm and $A_1$ of 1.5 mm. The value of $A_1/\lambda_1$ is about 0.038. The protection layer 5 is also a single layer containing steel cords with a strength of 100 kgf/cord as a reinforcing element $S_2$, which cords are formed into an approximately sine curve at $\lambda_2$ of 30 mm and $A_2$ of 10 mm. The value of $A_2/\lambda_2$ is about 0.333. Moreover, total strengths of the reinforcing layer 4 and the protection layer 5 per 5 cm in widthwise direction are 3000 kgf and 2000 kgf, respectively.

In Fig. 1, a tread width (TW) is 400 mm, a belt width (BW) is 300 mm, a reinforcing layer width (RW) is 230 mm and a protection layer width (PW) is 380 mm.

In order to evaluate the resistance to cut penetration in the tire of Example 1, there are provided tires of Comparative Example 1 and Conventional Example 1 as mentioned below.

Comparative Example 1

This tire has the same structure as in Example 1 except that conventional straight high-elongation steel cords are used as a reinforcing element instead of the reinforcing element in the protection layer 5 of Example 1 and have a cord inclination angle of 25° with respect to the circumferential direction of the tread. Moreover, total strength of the steel cords in this layer per 5 cm in a direction of end count is matched with that in the protection layer 5 of Example 1.

Conventional Example 1

The same layer as in Comparative Example 1 is used instead of the protection layer 5 of Example 1, while a conventional belt layer is used instead of the reinforcing layer 4 of Example 1. The strength and end count of the steel cords in this belt layer are matched with those in the reinforcing layer 4 of Example 1. That is, the tire of the conventional example 1 has three belt layers.

Example 2

In this example, there is provided a pneumatic radial tire for construction vehicles having a tire size of 36.00R51 and a tread class of E4, which has a basic construction shown in Fig. 1.

The carcass 1 is a single ply of radial structure containing steel cords therein. The belt 3 is comprised of two belt layers each containing steel cords with a strength of 600 kgf/cord arranged at an end count of 15 cords/5 cm at an inclination cord angle of 25° with respect to the circumferential direction of the tread, the cords of which layers are crossed with each other.

The reinforcing layer 4 is comprised of two layers each containing steel cords with a strength of 600 kgf/cord as a reinforcing element $S_1$, which cords are formed into an approximately sine curve at $\lambda_1$ of 35 mm and $A_1$ of 2 mm. The value of $A_1/\lambda_1$ is about 0.057. The protection layer 5 is also comprised of two layers each containing steel cords with a strength of 250 kgf/cord as a reinforcing element $S_2$, which cords are formed into an approximately sine curve at $\lambda_2$ of 45 mm and $A_2$ of 10 mm. The value of $A_2/\lambda_2$ is about 0.222. Moreover, total strengths of the reinforcing layer 4 and the protection layer 5 per 5 cm in widthwise direction are 5000 kgf and 2500 kgf, respectively.

In Fig. 1, TW is 800 mm, BW is 620 mm, RW is 400 mm and PW is 780 mm.

In order to evaluate the resistance to cut penetration in the tire of Example 2, there are provided tires of Comparative Example 2 and Conventional Example 2 as mentioned below.

Comparative Example 2

This tire has the same structure as in Example 2 except that conventional straight high-elongation steel cords are used as a reinforcing element instead of the reinforcing element in the protection layer 5 of Example 2 and have a cord inclination angle of 25° with respect to the circumferential direction of the tread. Moreover, total strength of the steel cords in this layer per 5 cm in a direction of end count is matched with that in the protection layer 5 of Example 2.

Conventional Example 2

The same layer as in Comparative Example 2 is used instead of the protection layer 5 of Example 2, while two conventional belt layers are used instead of the reinforcing layer 4 of Example 2. The strength and end count of the steel cords in this belt layer are matched with those in the reinforcing layer 4 of Example 2. That is, the tire of the conventional example 2 has four belt layers.

An indoor test for cut penetration was conducted with respect to the above six tires. In this case, the tire is mounted onto a standard rim and inflated under a standard internal pressure, which is pushed onto each of cutters having a triangular shape in section and three different heights under a standard load to evaluate a state of cut penetration. In the case of the tire size of 18.00R25, three cutters B, C and D are used, in which a cutting height is 90 mm in the cutter B, 120 mm in the cutter C and 150 mm in the cutter D. In the case of the tire size of 36.00R51, three cutters E, F and G are used, in which a cutting height is 180 mm in the cutter E, 240 mm in the cutter F and 300 mm in the cutter G.

Test Results 1

Example 1: Although the cutters B and C arrive at the protection layer, cutting is not caused, while only the protection layer is cut by the cutter D.

Comparative Example 1: Although the cutter B arrives at the high-elongation cord layer, cutting is not caused, while this layer is cut by the cutter C and also the carcass is cut by the cutter D.

Conventional Example 1: The high-elongation cord layer is cut by the cutter B, while the cutter C cuts this layer and belt and also the cutter D cuts the carcass.

Test Results 2

Example 2: Although the cutters E and F arrive at the outermost protection layer, cutting is not caused, while only the outermost protection layer is cut by the cutter G.

Comparative Example 2: Although the cutter E arrives at the high-elongation cord layer, cutting is not caused, while the two high-elongation layers are cut by the cutter F and also the two high-elongation layers and belt are cut by the cutter G.

Conventional Example 2: The cutter E cuts four layers in total from the outermost high-elongation layer, while the cutters F and G cut the carcass.

In the above tests, the cutting up to the carcass means complete cut penetration failure.

As seen from the above test results, the tires according to the invention have a considerably improved resistance to cut penetration.

Then, a test for durability to separation failure was conducted using a drum of 5 m in diameter. In this case, the test tire is inflated under a standard internal pressure and run on the drum at speeds of 20 km/hr in the case of the tire size of 18.00R25 and 10 km/hr in the case of the tire size of 36.00R51 under a so-called step-up load condition for a given time, in which the load is first started at 80% of a standard load and thereafter the load is increased to 100% and then the increasing rate of the load is 10%. The durability is evaluated by a running time until the occurrence of separation failure in the belt and represented by an index value on the basis that the running time in each of the conventional examples 1 and 2 is 100, wherein the larger the index value, the better the durability.

Test Results 3

In the case of the tire size of 18.00R25, the index value of Example 1 is 120 and that of Comparative Example 1 is 105. In the case of the tire size of 36.00R51, the index value of Example 2 is 130 and that of Comparative Example 2 is 110. As seen from these results, the tires according to the invention have excellent resistance to belt separation failure in addition to the above resistance to cut penetration.

As mentioned above, the invention can provide pneumatic radial tires for construction vehicles developing excellent resistance to belt separation and considerably improved resistance to cut penetration when riding over materials such as rocks and stones during running on rough roads and having a high economical value.

**Claims**

1. A pneumatic radial tire comprising a radial carcass (1) comprised of a single ply toroidally extending between a pair of bead cores (2) and containing steel cords therein, a belt (3) arranged outside the radial carcass and comprised of at least two belt layers each containing steel cords therein, a tread (6) arranged outside the belt, and a reinforcing layer (4) disposed between the radial carcass (1) and the belt (3) along an inner peripheral surface of an innermost belt layer in the belt, the reinforcing layer (4) including reinforcing elements ($S_1$) of steel cord or steel filament extending in a circumferential direction of the tire and having wavy or zigzag form of given period and amplitude, **characterized in that** a protection layer (5) is disposed between the belt (3) and the tread (6) along an outer peripheral surface of an outermost belt layer in the belt, and the protection layer (5) includes reinforcing elements ($S_2$) of steel cord or steel filament extending in a circumferential direction of the tire and having wavy or zigzag form of given period and amplitude, and in that the wavelength $\lambda_1$ and amplitude $A_1$ of each reinforcing element ($S_1$) in the reinforcing layer (4) and the wavelength $\lambda_2$ and amplitude $A_2$ of each reinforcing element ($S_2$) in the protection layer (5) satisfy the following relationships:

$$A_1/\lambda_1 < A_2/\lambda_2$$

$$A_1/\lambda_1 \leq 0.08$$

$$A_2/\lambda_2 \geq 0.10.$$

2. A pneumatic radial tire as claimed in claim 1, characterized in that said wavelengths $\lambda_1$, $\lambda_2$ and amplitudes $A_1$, $A_2$ satisfy the following relationships:

$$1.25 \text{ x } A_1/\lambda_1 \leq A_2/\lambda_2 \leq 70 \text{ x } A_1/\lambda_1$$

3. A pneumatic radial tire as claimed in claim 2, characterized in that

$$1.5 \text{ x } A_1/\lambda_1 \leq A_2/\lambda_2 \leq 40 \text{ x } A_1/\lambda_1$$

4. A pneumatic radial tire as claimed in any of claims 1 to 3, characterized in that $A_1/\lambda_1$ is not more than 0.06 and $A_2/\lambda_2$ is not less than 0.15.

5. A pneumatic radial tire as claimed in any of claims 1 to 4, characterized in that $A_1/\lambda_1$ is not less than 0.01 and $A_2/\lambda_2$ is not more than 1.0.

**Patentansprüche**

1. Radialer Luftreifen, mit einer radialen Karkasse (1), die aus einer einzelnen Lage besteht, die sich toroidförmig zwischen zwei Wulstkernen (2) erstreckt und Stahlcordfäden enthält, einem Gürtel (3), der außerhalb der radialen Karkasse angeordnet ist und aus mindestens zwei Gürtelschichten besteht, von denen jede Stahlcordfäden enthält, einer Lauffläche (6), die außerhalb des Gürtels angeordnet ist, und einer Verstärkungsschicht (4), die zwischen der radialen Karkasse (1) und dem Gürtel (3) längs der inneren Umfangsoberfläche der innersten Gürtelschicht des Gürtels angeordnet ist. wobei die Verstärkungsschicht (4) Verstärkungselemente ($S_1$) aus Stahlcordfaden oder Stahlfilament umfaßt, die sich in der Umfangsrichtung des Reifens erstrecken und eine wellenförmige oder zickzackförmige Form mit vorgegebener Periode und Amplitude haben, dadurch gekennzeichnet, daß eine Schutzschicht (5) zwischen dem Gürtel (3) und der Lauffläche (6) längs der äußeren Umfangsoberfläche der äußersten Gürtelschicht des Gürtels angeordnet ist, und die Schutzschicht (5) Verstärkungselemente ($S_2$) aus Stahlcordfaden oder Stahlfilament umfaßt, die sich in der Umfangsrichtung des Reifens erstrecken und eine wellenförmige oder zickzackförmige Form mit vorgegebener Periode und Amplitude haben, und daß die Wellenlänge $\lambda_1$ und die Amplitude $A_1$ jedes Verstärkungselements ($S_1$) der Verstärkungsschicht (4), und die Wellenlänge $\lambda_2$ und die Amplitude $A_2$ jedes Verstärkungselements ($S_2$) der Schutzschicht (5) die folgenden Beziehungen erfüllen:

$$A_1/\lambda_1 < A_2/\lambda_2$$

$$A_1/\lambda_1 \leq 0{,}08$$

$$A_2/\lambda_2 \geq 0{,}10.$$

2. Radialer Luftreifen gemäß Anspruch 1, dadurch gekennzeichnet, daß die Wellenlängen $\lambda_1$, $\lambda_2$ und die Amplituden $A_1$, $A_2$ die folgenden Beziehungen erfüllen:

$$1.25 \text{ x } A_1/\lambda_1 \leq A_2/\lambda_2 \leq 70 \text{ x } A_1/\lambda_1$$

3. Radialer Luftreifen gemäß Anspruch 2, dadurch gekennzeichnet, daß

$$1{,}5 \text{ x } A_1/\lambda_1 \leq A_2/\lambda_2 \leq 40 \text{ x } A_1/\lambda_1$$

4. Radialer Luftreifen gemäß irgendeinem der Ansprüche 1 bis 3, dadurch gekennzeichnet, daß $A_1/\lambda_1$ nicht größer als 0,06, und $A_2/\lambda_2$ nicht kleiner als 0,15 ist.

5. Radialer Luftreifen gemäß irgendeinem der Ansprüche 1 bis 4, dadurch gekennzeichnet, daß $A_1/\lambda_1$ nicht kleiner als 0,01, und $A_2/\lambda_2$ nicht größer als 1,0 ist.

**Revendications**

1. Pneumatique radial comprenant une carcasse radiale (1) composée d'une nappe s'étendant de façon toroïdale entre une paire de tringles (2) et contenant des câblés d'acier, une ceinture (3) agencée à l'extérieur de la carcasse radiale et composée au moins de deux couches de ceinture, contenant chacune des câblés d'acier, une bande de roulement (6) agencée à l'extérieur de la ceinture et une couche de renforcement (4) agencée entre la carcasse radiale (1) et la ceinture (3) le long d'une surface périphérique interne d'une couche de ceinture située la plus à l'intérieur dans la ceinture, la couche de renforcement (4) englobant des éléments de renforcement ($S_1$) en câblés d'acier ou en filaments d'acier s'étendant dans une direction circonférentielle du pneumatique et ayant une forme ondulée ou en zig-zag, de période et d'amplitude donnée, caractérisé en ce qu'une couche de protection (5) est agencée entre la ceinture (3) et la bande de roulement (6) le long d'une surface périphérique externe d'une couche de ceinture située la plus à l'extérieur dans la ceinture, la couche de protection (5) englobant des éléments de renforcement ($S_2$) de câblés d'acier ou de filaments d'acier s'étendant dans une direction circonférentielle du pneumatique et ayant une forme ondulée ou en zig-zag, de période et d'amplitude donnée, et en ce que la longueur d'onde $\lambda_1$ et l'amplitude $A_1$ de chaque élément de renforcement ($S_1$) dans la couche de renforcement (4) et la longueur d'onde $\lambda_2$ et l'amplitude $A_2$ de chaque élément de renforcement ($S_2$) dans la couche de protection (5) satisfont aux relations ci-dessous:

$$A_1/\lambda_1 < A_2/\lambda_2$$

$$A_1/\lambda_1 \leq 0,08$$

$$A_2/\lambda_2 \geqq 0,10.$$

2. Pneumatique radial selon la revendication 1, caractérisé en ce que lesdites longueurs d'onde $\lambda_1$, $\lambda_2$ et les amplitudes $A_1$, $A_2$ satisfont aux relations ci-dessous:

$$1,25 \times A_1/\lambda_1 \leq A_2/\lambda_2 \leq 70 \times A_1/\lambda_1$$

3. Pneumatique radial selon la revendication 2, caractérisé en ce que

$$1,5 \times A_1/\lambda_1 \leq A_2/\lambda_2 \leq 40 \times A_1/\lambda_1$$

4. Pneumatique radial selon l'une quelconque des revendications 1 à 3, caractérisé en ce que $A_1/\lambda_1$ n'est pas supérieur à 0,06 et en ce que $A_2/\lambda_2$ n'est pas inférieur à 0,15.

5. Pneumatique radial selon l'une quelconque des revendications 1 à 4, caractérisé en ce que $A_1/\lambda_1$ n'est pas inférieur à 0,01 et en ce que $A_2/\lambda_2$ n'est pas supérieur à 1,0.

# FIG_1

## FIG_2a

## FIG_2b

## FIG_3

FIG.4